# EUROPEAN PATENT APPLICATION

(11) **EP 2 230 812 A1**
(43) Date of publication of application: **22.09.2010**
(21) Application number: 09290207.1
(22) Date of filing: 19.03.2009
(51) Int. Cl.: H04L 29/06

(54) **Call processing apparatus**

(71) Applicant: FRANCE TELECOM, 75015 Paris (FR)
(72) Inventor: Tutcher, Benomy, 75015 Paris (FR); Evans, Mark A., 75015 Paris (FR)
(74) Representative: McCann, Heather Alison

(57) **Abstract**

Embodiments of the invention are concerned with processing a service initiation request message sent by a switching node in a legacy network, when the requested service involves use of an Internet Protocol serving node such as a Session Internet Protocol (SIP) Application Server and the legacy network does not have the functionality required to support the requested service.

Embodiments of the invention provide a call processing apparatus for use in processing service initiation request messages in a call processing system, the call processing system comprising a switching node (MSC) and an Internet Protocol (IP) session-based serving network node (SIP AS), and the service initiation request message corresponding to a service to be provided by the call processing system; the apparatus comprises a function arranged, on the basis of a service initiation request message sent by the switching node (MSC) in a network currently involved in call setup, to identify the network service as one that requires anchoring with a gateway serving node (MGW) capable of processing signaling data received from the switching node (MSC) and signaling data received from the IP session-based serving network node (SIP AS).

Thus embodiments of the invention provide a means for identifying that the service requested is one that cannot be handled based on the inherent capabilities of the network from which the service initiation request message, or trigger, is received, and flags the requested service as one that requires anchoring in a SIP domain. The flag can subsequently be used at an appropriate point in the subsequent steps of the call set-up process, to anchor the call with a media gateway and thereby shift the context of the call to the SIP domain.

## Description

### Field of the Invention

The present invention relates to a call processing apparatus and is particularly, but not exclusively, suited to the processing of a service initiation request message sent by a switching node in a legacy network, when the requested service involves use of an Internet Protocol serving node such as a Session Internet Protocol (SIP) Application Server.

### Background of the Invention

The third generation partnership project known as 3GPP has developed and standardized an Internet Protocol Multimedia Sub-system (IMS) to provide a multi media and call control service architecture. The service architecture is supported by a real-time capable Universal Mobile Telecommunications System (UMTS) communicating data in the form of Internet Protocol (IP) packets. IMS provides a basis for service provision and development of new services and is envisioned as a standardised convergence platform, which enables integration of real time multi-media services with non-real time services and person-to-machine communications. The IMS includes an Application Server known as the IP Multimedia Service Switching Function (IM-SSF): as documented in TS 23.278, the IM-SSF performs mediation between the S-CSCF and the Customized Applications for Mobile Networks Enhanced Logic (CAMEL) Application Protocol (CAP) and inter-working of SIP messages to the corresponding CAMEL mechanisms. In addition, Call State models are logically located within the IM-SSF which performs a mapping process between SIP methods passed across the ISC and CAMEL mechanisms that will be used to initiate dialogue with the CAMEL service environment.

In addition the 3GPP has standardised the triggering of SIP services from GSM R4 networks (as described in TS 23.292). However, many GSM networks implement equipment configured according to CS-1 (Intelligent Network Application Protocol (INAP)). This standard does not support certain features such as multi-leg calls coordinated by a SIP server. An example of a multi-leg call is one where a calling party is directed first to a voice response unit (i.e. recorded message), and then, when an operator becomes available, connected to an operator: in this example both the voice response unit and the operator make up different legs of the same call. As it stands, CS-1 networks cannot support this, which is to say that the call would be dropped by the GSM switch at the point at which the call is transferred from the voice response unit by the SIP application server to the operator.

Whilst the more developed incarnations of INAP and CAMEL, specifically CS-1+ and CS-2 and CAPv4, do support multi-leg functionality, only a selection of equipment manufacturers have implemented these versions of the CAMEL Application Protocol and IN Application Protocol. In any event, such a solution requires a network operator currently implementing legacy equipment to upgrade their equipment, which is an expensive solution. Moreover, and looking to the future, vendors are developing SIP Application Servers (AS) for an increasing range of call handling functions, and it is inevitable that their functionality will at some point outstrip the functionality supported by any flavour of CAMEL. Further, SIP Application Servers typically run on off the shelf platforms such as the Linux operating system; they are coded via open-standards like SIP servlets or Java APIs for Integrated Networks (JAIN-SIP, all of which are open. So, since the costs are far lower, it is likely that new call handling functions are more likely to be built around SIP technology than as IN platforms.

It would therefore be desirable to provide a call processing apparatus that can enable legacy networks to participate in the increasingly diverse range of services provided by SIP applications.

### Summary of the Invention

In accordance with one aspect of the present invention, there is provided a call processing system according to the appended claims. Accordingly preferred features of the call processing system are set out in the dependent claims.

More specifically embodiments of the invention provide a call processing apparatus for use in processing service initiation request messages in a call processing system, the call processing system comprising a switching node (MSC) and an Internet Protocol (IP) session-based serving network node (SIP AS), and the service initiation request message corresponding to a service to be provided by the call processing system,
the apparatus comprising a function arranged, on the basis of a service initiation request message sent by the switching node (MSC) in a network currently involved in call setup, to identify the network service as one that requires anchoring with a gateway serving node (MGW) capable of processing signaling data received from the switching node (MSC) and signaling data received from the IP session-based serving network node (SIP AS).

Thus embodiments of the invention provide a means for identifying that the service requested is one that cannot be handled based on the inherent capabilities of the network from which the service initiation request message, or trigger, is received, and flags the requested service as one that requires anchoring in a SIP domain. The flag can subsequently be used at an appropriate point in the subsequent steps of the call set-up process, to anchor the call with a media gateway and thereby shift the context of the call to the SIP domain.

In one arrangement this involves the call processing apparatus being configured such that, on the basis of a session initiation response message received from the IP session-based serving network node (SIP AS) relating to said service initiation request message, the function is further arranged to generate a redirecting instruction message, said redirecting instruction message comprising an identifier associated with the call, and to transmit said generated redirecting instruction message to the switching node (MSC) from which the service initiation request message is received so as to anchor the call with the media gateway (MGW).

Since the call processing apparatus shifts the context of the call, embodiments of the invention enable any SIP AS to be developed with absolutely no need to know anything about the networks from which calls, which use its functionality, originate, while at the same time enabling these SIP AS to work with any hybrid of networks (fixed or mobile).

In a preferred arrangement the apparatus comprises storage arranged to store a mapping between a service identifier and a call anchoring requirement and wherein, responsive to a determination that the service initiation request message contains a first type of said service identifier, the apparatus is arranged to identify the network service as requiring anchoring by said gateway serving node. Thus the call processing system can be provisioned with data that governs call anchoring decisions: these data include service keys and the like, such as are conventionally included within IDP messages received from a CAMEL network. Conveniently the data also includes addressing data indicative of an IP session-based serving network node corresponding to the service identifier, said addressing data being for use in generating a session-based service initiation request message corresponding to said service initiation message received from the switching node.

The call processing apparatus can be configured to monitor for receipt of said session initiation response message, and, responsive to same, to generate said redirecting instruction message. The redirecting instruction message can be embodied as a correlation identifier, which is stored locally by the call processing system for subsequent use in identifying subsequently received signaling messages as being related (or not) to the service initiation request message (or trigger from the switching node in the legacy network).

Thus, the call processing system is effectively armed to monitor for a session initiation response message corresponding to the requested service; in one arrangement, upon receipt thereof, the function is arranged to compare the content of said session initiation response message with a predetermined call processing criterion, whereby to generate said redirecting instruction message. In this arrangement, which is most conveniently suited to a so-called announcements call follow, the function is arranged to store said content of the session initiation response message and to identify an IP session-based service node (MRF) from said content of the session response message. The content of the session initiation response message may, for example, be derivable from the body of the message in the case where the session response message is sent from a SIP serving network node.

Subsequently, and responsive to receipt of signaling data from the gateway serving node (MGW) the function is arranged to correlate said signaling data with data within said redirecting instruction message, whereby to identify said IP session-based service node (MRF), the function being further arranged to transmit a media reservation instruction message to said IP session-based service node (MRF) in respect of a first stage of the service. This results in the MRF reserving the relevant media required for the announcement, so that, when the call set-up process has ended, the calling party is connected to the MRF in accordance with conventional methods.

In a particularly preferred embodiment of the invention the call processing system is additionally capable of operating in a proxy mode, which is to say that at a predetermined point in the call set-up process, the function is arranged to proxy further signalling messages between said gateway serving node (MGW), the IP session-based service node (MRF) and the Internet Protocol (IP) session-based serving network node (SIP AS), whereby to set up a voice connection between the gateway serving node (MGW) and the IP session-based service node (MRF) corresponding to the first stage of the service. This may be performed by, for example, the function modifying routing headers in SIP messages passing between the SIP Application Server, the MRF and the gateway serving node.

In another arrangement, and responsive to the session initiation response message, the function is arranged to monitor for further session initiation response messages of a predetermined type. These response messages may be INVITE A, X SIP messages that are part of a multi-leg call flow, and accordingly the function is arranged to monitor for said further session initiation response message during a predetermined period. The predetermined period can be set by use of a suitable timer, whose period is configurable, for example on the basis of the type of further session response message.

Each such response message is analysed by the call processing apparatus so as to identify and store, locally, data indicative of a party to the network service from said further session initiation response messages. This effectively results in a positive identification of all potential parties to the multi-leg call. In this arrangement, the function is arranged to send said redirecting instruction message (which again may be configured as a correlation identifier) after a determination that all further session initiation response messages corresponding to the network service have been received. This determination may be made upon expiry of the timer, for example, so it will therefore be appreciated that an appropriately set timer is a relevant aspect of the configuration of the call processing apparatus.

In this arrangement, and responsive to receipt of signaling data from the media gateway, the function is arranged to correlate said signaling data with data within said redirecting instruction message, and to transmit, on the basis of said stored data indicative of parties to the network service, session setup request messages in respect of the network service to at least some said parties. In one arrangement session setup request messages (e.g. SIP messages containing SDP (Session Description Protocol)) are sent to all of the parties identified in the series of INVITE A, X messages received from the SIP Application Server during the period in which the timer is active.

As for the first arrangement, but in this case in response to a signaling message indicative of one of said parties responding in respect of said session setup request messages, the function is arranged to proxy further signaling messages between said media gateway and the Internet Protocol (IP) session-based serving network node (SIP AS).

When operating in the proxy mode the call processing apparatus stores an identifier relating to the network service in the storage, said identifier being indicative of the network service and being included in headers of respective signaling messages; this enables the call processing apparatus to correlate signaling session messages with a respective network service, and is useful in the event that the call processing apparatus is handling several call set-up for a plurality of requested network services.

In one arrangement the call processing apparatus is configured as a network node comprising an IP Multimedia Service Control Interface (ISC) and a Camel Application Part (CAP) Interface and/or an Intelligent Network Application Part (INAP) Interface, while in another the call processing apparatus is configured as a network node comprising a Session Internet Protocol (SIP) Interface and a Camel Application Part (CAP) Interface and/or an Intelligent Network Application Part (INAP) Interface.

According to a further aspect of the present invention there is provided a call processing apparatus for use in processing an existing call originating in a circuit switching network and comprising a plurality of stages, at least some said stages being initiated by an Internet Protocol (IP) session-based serving network node (SIP AS), said IP session-based serving network node (SIP AS) being operable to generate a session initiation message in response to occurrence of a predetermined network event during the call, wherein the call processing apparatus is arranged to store configuration data indicative of an identifier relating to the existing call,
wherein, responsive to receiving a session initiation message indicative of a further stage, the call processing apparatus is arranged to match the received application trigger message against the configuration data, whereby to identify a gateway serving node (MGW) involved in the existing call, the call processing apparatus being further arranged to forward said session initiation message to the identified gateway serving node (MGW) for progressing said further stage.

In embodiments of this aspect of the invention the call processing system is configured to intercept trigger messages that are sent during a call that comprises a plurality of stages, and in respect of which initial call set-up has already been completed. This aspect of the invention is particularly useful for network services such as multi-leg calls and where triggering of a further leg of the call occurs in the SIP domain and involves a party in a legacy network: in such scenarios it is important that this further leg of the call is routed to the media gateway acting as an anchor point for the legacy end of the call so as to ensure the call is not dropped.

The call processing apparatus is particularly well suited to network services such as, but not limited to, call announcements and inter-party recorded messaging services, multi-leg call flow and parallel hunting, where the service logic and call control is provisioned by a SIP application server.

Embodiments of the various aspects of the invention can be controlled by software components, configuration data and call processing logic characterising the call processing system, further features of which will now be described in more detail with reference to the accompanying drawings.

### Brief Description of the Drawings

Figure 1 is a schematic diagram showing a first call processing system within which embodiments of the invention can operate;
Figure 2 is a schematic diagram showing a second call processing system within which embodiments of the invention can operate;
Figure 3 is a schematic diagram showing functional relationships between various components shown in Figure 3;
Figure 4 is a schematic block diagram showing an exemplary configuration of components of the call processing apparatus according to an embodiment of the invention;
Figure 5 is a schematic timing diagram showing operation of the call processing apparatus of Figure 4 according to an embodiment of the invention;
Figure 6 is a schematic timing diagram showing operation of the call processing apparatus of Figure 4 according to a further embodiment of the invention;
Figure 7 is a schematic timing diagram showing operation of the call processing apparatus of Figure 4 according to a further aspect of the invention; and
Figures 8 and 9 are schematic timing diagrams showing operation of the call processing apparatus of Figure 4 according to a yet further aspect of the invention.

### Detailed Description of the Invention

As described above, embodiments of the invention are concerned with managing network capabilities by changing call context between network types, and have particular application in situations in which a request for a network service originates within a legacy, circuit-switched, network, and where the requested network service requires use of service logic handed by a Session Internet Protocol (SIP) server. Examples of such legacy networks include, but are not limited to, cellular mobile communications networks that implement equipment according to CAMEL Phase I-III in GSM Phase II+ (CS-1) and mobile or fixed communications networks that implement the Intelligent Network Application Protocol (INAP).

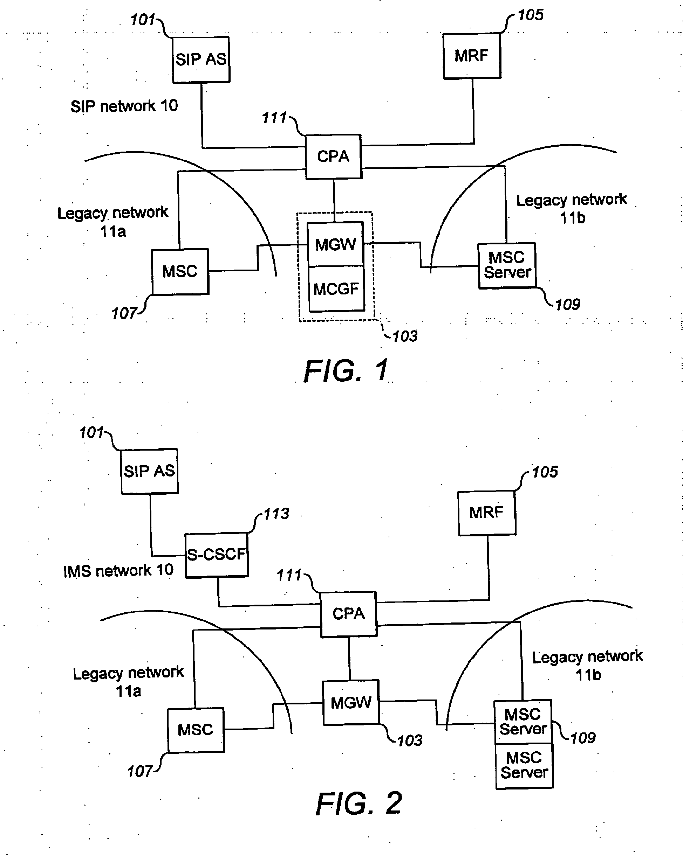

Figure 1 shows a selection of network components characterising an exemplary call processing system within which embodiments of the invention operate. The SIP network 10 comprises a SIP Application Server (SIP AS) 101 and an integrated Media Gateway (MGW) and Media Gateway Control Function (MGCF) 103. As is known in the art, a SIP AS is in charge of hosting service logic and handling service execution; the MGW provides an interface for bearer traffic between packet switched and circuit switched networks, while the MGCF provides signalling interoperability between packet and circuit switched networks: SIP to ISUP (ISDN User Part) and vice-versa. Signalling data are communicated between the various components of the SIP network 10 via SIP over IP. In certain embodiments (to be described later), the SIP network 10 also comprises a Media Server (MRF) 105, which provides media related functions such as media manipulation and the playing of tones and announcements.

In Figure 1, two exemplary legacy networks 11a, 11b are shown. The first legacy network 11 a is implemented as GSM Release 99 (described in the 1999 release of TS 01.01); signalling and media data are communicated between the various components of the network - in this case between MSC 107 and the integrated MGW 103 - via ISUP and Time Division Modulation (TDM) respectively. The second legacy network 11b is implemented as GSM Release-4 (described in the corresponding release of TS 41.101); signalling and media data are communicated between the various components of the network - in this case between MSC Server 109 and the integrated MGW 103 - via H.248 and Real-time Transport Protocol (RTP). Whilst the legacy networks are shown as mobile communications networks it is to be understood that the legacy network could comprise a fixed network that implements the Intelligent Network Application Protocol.

Figure 2 shows an alternative call processing system environment within which embodiments of the invention operate. In this environment the SIP AS operates within an IP Multimedia Subsystem (IMS) 10. As is known in the art, an IMS network can be split into four main functional entities: the Interrogating Call Session Control Function (I- CSCF), the Serving Call Session Control Function (S-CSCF), the Proxy Call Session Control Function (P-CSCF) and the Home Subscriber Server (HSS). Of these various components, the entity of relevance to embodiments of the invention is the Serving Call Control Function (S-CSCF) 113, since this is responsible for various signalling functions and performs service triggering by interacting with an application server such as SIP AS 101 via the ISC interface.

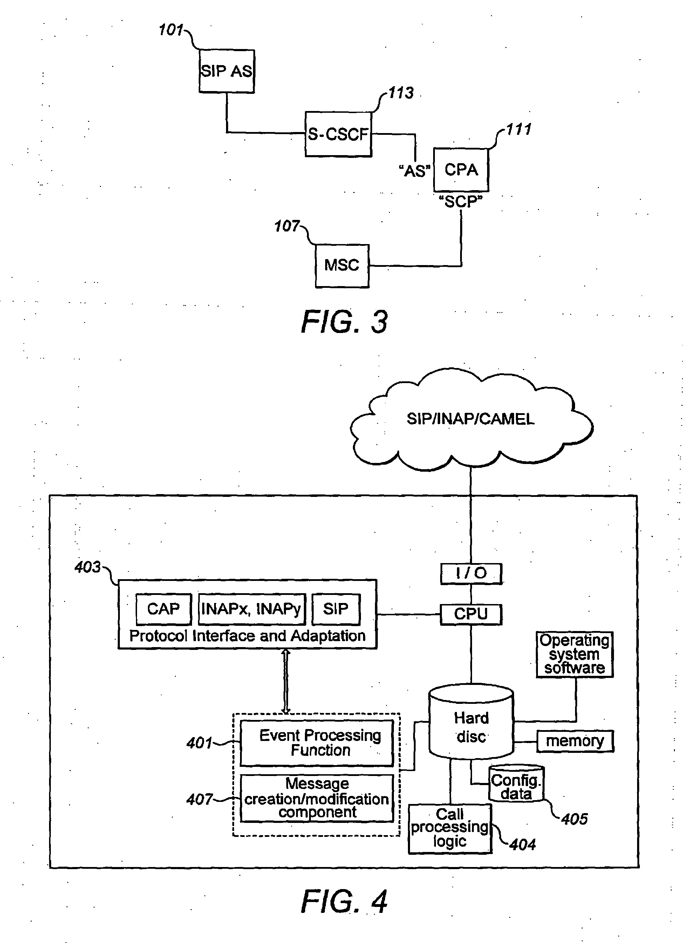

Figures 1 and 2 also show a Call Processing Apparatus (CPA) 111 according to an embodiment of the invention. By virtue of IN subscription data maintained by the Home Location Register (HLR-not shown) for a subscriber requesting a network service, the CPA 111 is arranged to receive certain service initiation messages during call set-up. These service initiation messages correspond to certain subscribed and B number requested services, specifically those that are implemented as SIP applications. For such services, if a call is initiated within a legacy network 11a, 11b, the call has to be routed into the SIP/IMS network 10 for the call to be correctly set up, and to this end the CPA 111 is configured to include the conventional functionality required to perform the required mapping of IN to SIP messages. As far as the other network components are concerned, and as shown in Figure 3, the CPA 111 appears as a Service Control Point (SCP) to the MSC 107, it appears as an Application Server to the S-CSCF 113, and as an S-CSCF to the SIP AS 101.

In addition to these conventional components, the CPA 111 comprises bespoke processing and service logic components, specifically components required to identify, and shift the context of, network services requiring functionality beyond that which can be supported via the legacy networks 11a, 11b. As described in the background section, these network services include (but are not limited to) multi-leg calls that are coordinated by a SIP server, since these cannot be supported by certain CAMEL networks. Thus if a node configured according to TS 23.292 were to receive an IDP corresponding to a service involving an announcement and then connection to operator, the call would be dropped upon initiation of a second (operator) leg.

Thus, and to overcome this problem, in addition to the afore-mentioned conventional functionality, the CPA 111 is configured with call processing logic and a function that analyses service keys embedded within these service initiation messages received from the legacy networks 11a, 11b; the function and call processing logic is configured so as to enable the CPA 111 to identify network services that require shifting from the INAP/CAP domain to the SIP domain. Accordingly, and turning to Figure 4, in addition to standard operating system, hard disc, I/O, memory and bus components, the CPA 111 comprises an event processing function 401, which is arranged to process IDP messages received via the protocol interface 403. More specifically, on the basis of call processing logic 404 instantiated with data contained within the IDP message and configuration data 405 held local to the CPA 111, the event processing function 401 is arranged to determine whether or not the requested service is of the type that requires handling in, and thus moving to, the SIP domain. In cases where the determination is positive, the event processing function 401 allocates a session identifier for the requested service and stores a flag against the session identifier, the flag indicating that at a certain point in subsequent call set-up (to be described below), the call will be anchored with the MGW 103.

In addition the CPA 111 comprises a message creation component 407, which cooperates with the event processing function 401 to create a suitable redirecting instruction message when the afore-mentioned point in the call set-up process has been reached. The redirecting instruction message comprises a correlation ID and is sent to the MSC 107 currently involved in the call, while the correlation ID is stored by the event processing function 401 (e.g. in the configuration data 405 for this session identifier) for use in subsequent call set-up handling events as will be described in more detail below.

In addition to triggering a change to where, in the call processing system, the requested service is anchored, the event processing function 401 is arranged to proxy messages between the MGW 103 and the SIP AS 101 from a certain point in the call. In one arrangement this involves the CPA 111 using the message modification component 407 to change router headers within SIP messages passed between the SIP AS 101 and MGW 103 as will be described in more detail below.

The configuration data 405 thus comprise a combination of fixed data, for use in determining how to handle call set-up, and data that are dynamically populated on a per network service basis, so as to enable the CPA 111 to distinguish between differently provisioned network services and signalling messages corresponding thereto. As regards the dynamic data, the identity of the calling party identified from the IDP service initiation request message is stored for use in correlating session initiation response messages received from the SIP components during call set up, in particular during call anchoring. In addition, in one arrangement each network service that has been anchored at the MGW 103 is allocated an IMS session identifier, this subsequently being used to proxy signalling messages between the various network components. As regards the fixed data, the configuration data 405 include a mapping between the service key in the service initiation request message, an anchoring requirement and the identity of a SIP AS corresponding to the service key, and can optionally contain service-specific network address mapping data. Such service-specific network address data could include IP addresses of available MRF nodes 105, which are queried by the event processing function 401 upon receipt of INVITE messages of a particular syntax, as will be described in more detail below. In addition the fixed data comprise network identifiers corresponding to the MGW 103 for use in provisioning redirecting instruction messages.

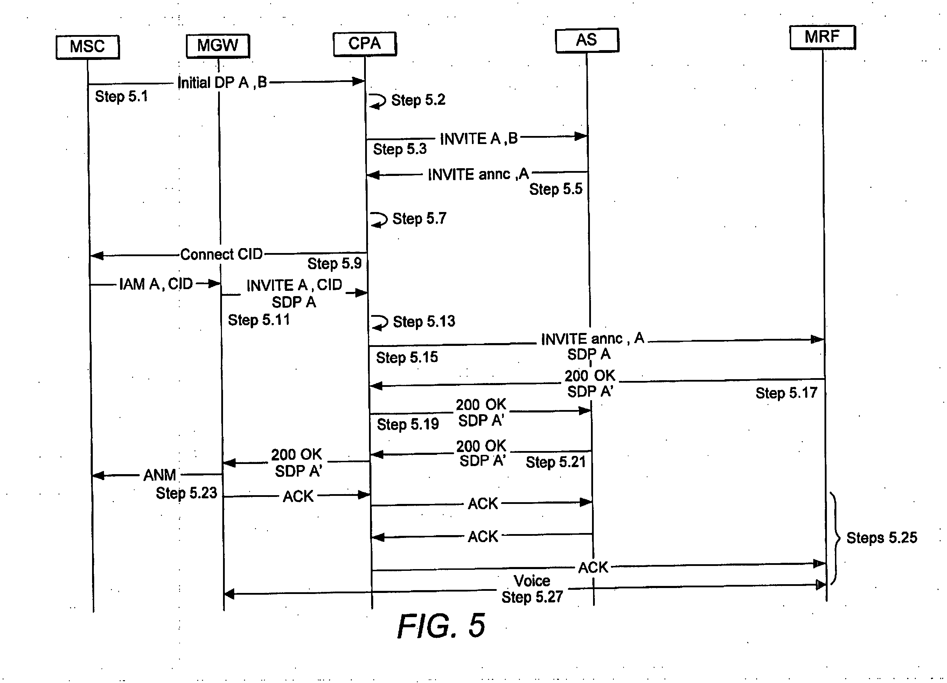

Turning to Figure 5, operation of the CPA 111 according to an embodiment of the invention will now be described in the context of a call to a B number (B#) which corresponds to a SIP service involving a media server such as MRF 105. At step 5.1 the CPA 111 receives an initial DP trigger from the legacy network switch 107 comprising a calling party (A) and called party (service B). In response, the CPA 111 identifies the service key from the service initiation request message and uses the identified service key to query the configuration data 405 for an application server (step 5.2). In addition it compares the service key against a list of keys that indicate a requirement for the call to be anchored in the SIP network; finding that this service key corresponds to a network service that indeed requires moving to the MGW 103 for successful end-to-end call processing, the event processing function 401 creates an entry in an internal dynamic table within the configuration data for the calling party (in this case Party A). This latter step applies to all embodiments of the invention and characterises the CPA 111 in its most basic form: the CPA 111 is arranged to flag a call originating in a legacy, non-IP, network as requiring anchoring in the SIP network on the basis of service key information contained within a service initiation request message.

There are various ways in which this flag information can be used, each of which is service specific and has a bearing on the point in the call set-up when the call is actually anchored in the SIP network. In the current example, which, as mentioned above, involves announcements from a media server, the event processing function 401 subsequently sends a session initiation message, SIP INVITE (A,B) to the SIP AS 101 identified from the configuration data (corresponding to the service key) (step 5.3). At some point thereafter the CPA 111 receives a session initiation response message, INVITE (annc@1.1.1.1, A), identifying the media resource server (step 5.5).

In response to receipt of the session initiation response message sent at step 5.5, the event processing function 401 identifies the parameters from within the response message. Finding that one of the parameters (A) matches an identifier stored in the dynamic table within the configuration data, the event processing function 401 triggers a redirecting procedure (step 5.7). The redirecting procedure involves allocating a correlation identifier, CID, corresponding to a port of the MGW 103, and the message creation component 407 creating a redirecting instruction message in the form of a standard CONNECT message comprising CID for sending to the MSC 107. In addition the allocated correlation identifier CID is stored in the dynamic table in the configuration data against the calling party identifier A.

Thus at this point in the call set up procedure the dynamic, call set-up specific, dynamic configuration data comprise the following data:

| | |
|---|---|
| Calling Party | A |
| Call Re-anchor requirement | Yes |
| Correlation ID | CID(MGW) |
| SIP AS | corresponding to Called Party B |
| Service | annc@1.1.1.1 |

At step 5.9 the created CONNECT CID redirecting instruction message is transmitted to the MSC 107, which, in accordance with conventional methods, responds by sending an ISUP Initial Address Message IAM having A, CID as parameters, to the MGW 103. Again, in accordance with conventional methods, the MGW 103 responds by sending a SIP INVITE message comprising session description data, together with the calling party A identifier and the correlation identifier CID (step 5.11). At this point in the call set-up procedure the call is considered to be anchored at the MGW 103, and thus further call set-up steps proceed within the SIP domain.

When this SIP INVITE message is received at the CPA 111, the event processing function 401 performs a look up of the dynamically populated configuration data so as to identify whether or not there is any current call state data corresponding to the parameters in the message sent at step 5.11. In this case parameters A and CID map to a SIP AS identity (B) and also a SIP service specification; accordingly, based on its internal call processing logic 404, the event processing function 401 determines that a next stage in the call set up is the sending of a SIP INVITE message to a MRF node 105 corresponding to the identifier "annc@1.1.1.1", and identifies a or the relevant MRF 105.

The IP address of the MRF 105 may be specified in the configuration data 405, or, for cases where the "annc@1.1.1.1" identifier is an alias, it may be determined on the basis of a further table in the configuration data 405, arranged to hold actual IP addresses for the various MRF nodes. In arrangements in which the SIP network 10 comprises several MRF 105 nodes for a given service (e.g. to handle loading etc. as would be expected for call centres and the like), each of which has an individual IP address, a suitable selection mechanism such as the well known round robin mechanism could be used to select an actual MRF 105 node (step 5.13). Once the IP address of the MRF 105 has been identified, a standard SDP INVITE message is sent thereto, with the identity of the calling party A as a parameter (step 5.15).

In addition the event processing function 401 may refresh the configuration data relating to the network service, deleting or updating any data no longer relevant to the next part of the call set up; thus at this stage the dynamic, call-specific data could comprise:

| | |
|---|---|
| Calling Party | A |
| Call Re-anchor requirement | Complete |
| SIP AS | corresponding to Called Party B |
| MRF | annc@164.134.176.01 |

Upon receipt of the SIP INVITE signalling message, the MRF 105 responds, per conventional methods, with a 200 OK (i.e. ringing) response message (step 5.17) having party A as parameter. In response, and on the basis of the call processing logic 404 local to the event processing function 401, the CPA 111 forwards the ringing signalling message to the SIP AS 101 (step 5.19). Subsequent steps 5.21-5.25 proceed per conventional procedures since the call is now anchored at the MGW 103, and the calling party A is connected with the MRF 105 and thus able to hear the corresponding recorded announcement.

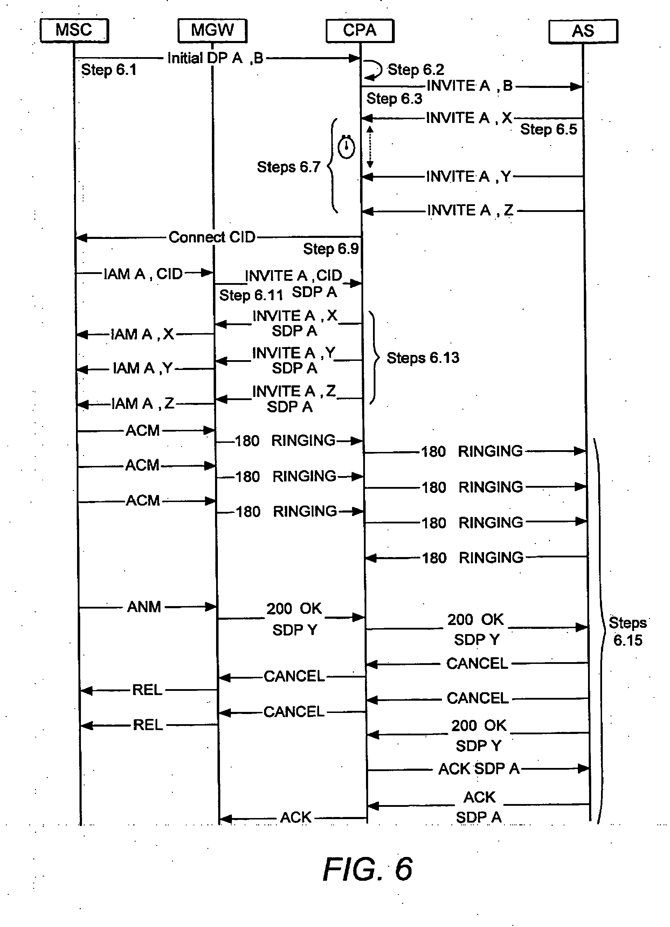

A second embodiment of the CPA 111 will now be described with reference to Figure 6, which shows call set-up of a multi-leg call. As for the first embodiment, at step 6.1 the CPA 111 receives an initial DP trigger from the legacy network switch 107 comprising a calling party (A) and called party (service B). In response, the CPA 111 identifies the service key corresponding to the requested service, using the identified service key to query the configuration data 405 for an application server (step 6.2). In addition it compares the service key against a list of keys that require anchoring in the SIP network, and, finding that this service key corresponds to a network service that indeed requires moving to the MGW 103 for successful end-to-end call processing, creates an entry in an internal dynamic table within the configuration data for the calling party (in this case Party A).

In this embodiment, as for the example described with reference to Figure 5, the event processing function 401 sends a session initiation message, SIP INVITE (A,B) to the SIP AS 101 identified from the configuration data (corresponding to the service key) (step 6.3). At some point thereafter the CPA 111 receives a session initiation response message, INVITE (A, X), identifying the calling party and a to-be-called party (step 6.5).

In response to receipt of the session initiation response message sent at step 6.5, the event processing function 401 identifies the parameters from within the response message. Finding that one of the parameters (A) matches an identifier stored in the dynamic table within the configuration data, while another of the parameters corresponds to a subscriber number, the event processing function 401 triggers activation of a timer having a specified duration (shown collectively as steps 6.7), and monitors for further session initiation response messages having calling party (A) therein. In the current example, three such response messages are received while the timer is active, each identifying a different subscriber number as called party (X, Y, Z). Once the timer has expired, and having determined that the requested network service involves multiple legs, the event processing function 401 determines that the call needs moving to the SIP domain. Accordingly it commences a redirecting procedure, and updates the dynamic configuration data for this network service as follows:

| | |
|---|---|
| Calling Party | A |
| Call Re-anchor requirement | Yes |
| Correlation ID | CID (MGW) |
| SIP AS | corresponding to Called Party B |
| Service | Multi-leg (X, Y, Z) |

As for the first embodiment the redirecting procedure involves allocating a correlation identifier, CID, corresponding to a port of the MGW 103, and the message creation component 407 creating a redirecting instruction message in the form of a standard CONNECT message comprising CID for sending to the MSC 107.

At step 6.9 the created CONNECT CID redirecting instruction message is transmitted to the MSC 107, which, in accordance with conventional methods, responds by sending an ISUP Initial Address Message IAM having A, CID as parameters, to the MGW 103. Again, in accordance with conventional methods, the MGW 103 responds by sending a SIP INVITE message comprising session description data, together with the calling party A identifier and the correlation identifier CID (step 6.11). At this point in the call set-up procedure the call is considered to be anchored at the MGW 103, and thus further call set-up steps proceed within the SIP domain.

When the INVITE A, CID SDP A message is received at the CPA 111, the event processing function 401 performs a look up of the dynamically populated configuration data so as to identify whether or not there are any current call state data corresponding to the parameters in the message sent at step 5.11. In this case parameters A and CID map to a multi-leg service; accordingly, and based on its internal call processing logic 404, the event processing function 401 determines that a next stage in the call set up is the sending of a series of session setup request messages INVITE A, X SDP A, one to each of the subscriber numbers (X, Y, Z) listed in the configuration data for this network service (shown collectively as steps 6.13). Subsequent steps proceed per conventional methods, and include the passing of ringing, then auswering, signalling messages (ACM (ISUP): 180 RINGING (SIP); ANM (ISUP): 200 OK (SIP)), and corresponding cancelation of others of the legs (shown collectively as steps 6.15).

The series of steps collectively coupled together as steps 6.15 illustrate further functionality of the CPA 111, namely its capability to operate as a proxy between the anchor points of the nodes handling further aspects of the call set-up. More specifically, on the basis of the call processing logic 404 associated with the event processing function 401, the CPA 111 determines that its active role in the call set up procedure is effectively finished, and that its role henceforth is passive. In order to perform the necessary proxying steps the CPA 111 maintains a session identifier for the calls set-up procedure, "ims-session" stored within the "route" header (route has been standardised for SIP communications (as specified in TS3261)). This allows the CPA 111 to identify a given signalling message as one of a particular call set-up process (as distinct from any others it may be handling at this time). Thus at this stage the dynamic, call-specific data could comprise:

| | |
|---|---|
| Calling Party | A |
| Call Re-anchor requirement | Complete |
| SIP AS | B |
| Current Leg | Y |
| ims session ID | embodied in an appropriate header, the "route" |
| header | |

The CPA 111 uses the session identifier to proxy further signalling messages by instructing the message modification component 407 to place a router header within the subsequently received SIP signalling messages.

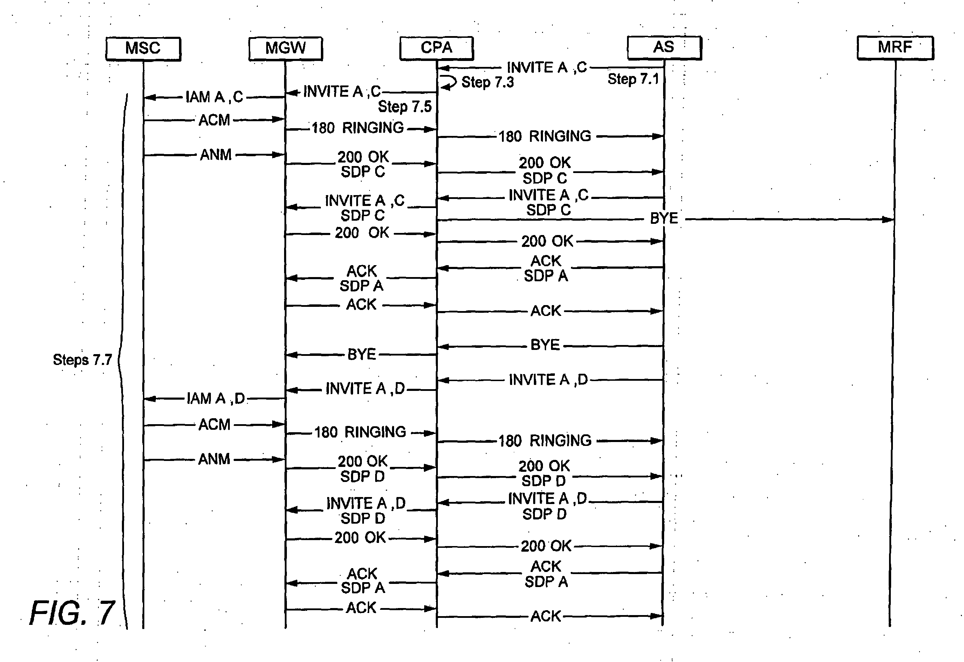

A further aspect of the CPA 111 will now be described, with reference to Figure 7. As described above, in a first aspect the CPA 111 performs the role of shifting the context of a requested network service into the SIP domain, thereafter actively and passively controlling call set-up for the requested service. However, the CPA 111 can also participate in events triggered during such a network service that it has set up and thus in what can be considered to be an "existing" call. Figure 7, which shows call set-up steps when a call is handed over from an announcement service to an operator, shows the simplest example of this aspect. The Figure corresponds to the call that was set up as described with reference to Figure 5, which is to say that step 7.1 of Figure 7 relates to the situation in which an operator indicates that he is able to take the call, and that the announcement can thus be ended. In more detail, and turning back briefly to Figure 5, at step 5.27 the calling party A was connected to a recorded message played by the MRF 105. This announcement continues, indefinitely until one of several actions occurs. These actions include the calling party hanging up (in which case the call ends; this is not the subject of the present invention), or the SIP AS 101 receives a notification that an operator is available and that the call can therefore be transferred from the MRF 105 to another party. This latter scenario is shown in Figure 7: at step 7.1 the SIP AS 101 sends a session initiation message INVITE A, C indicative of a further stage of the call to the CPA 111. Upon receipt of the session initiation message the CPA 111 retrieves the parameters therefrom and queries the configuration data for all existing calls on the basis of the retrieved parameters. In this case there is an entry corresponding to calling party A, and accordingly the event processing function 401 identifies that this is a call that has been anchored in the SIP domain (step 7.3) and forwards the session initiation message to the MGW 103 currently anchoring the call (step 7.5). Subsequent steps (shown collectively as steps 7.7) proceed per conventional methods, with the CPA 111 acting as a proxy for the signalling messages that are transmitted for this stage, or part, of the call (which is essentially a further call set-up process).

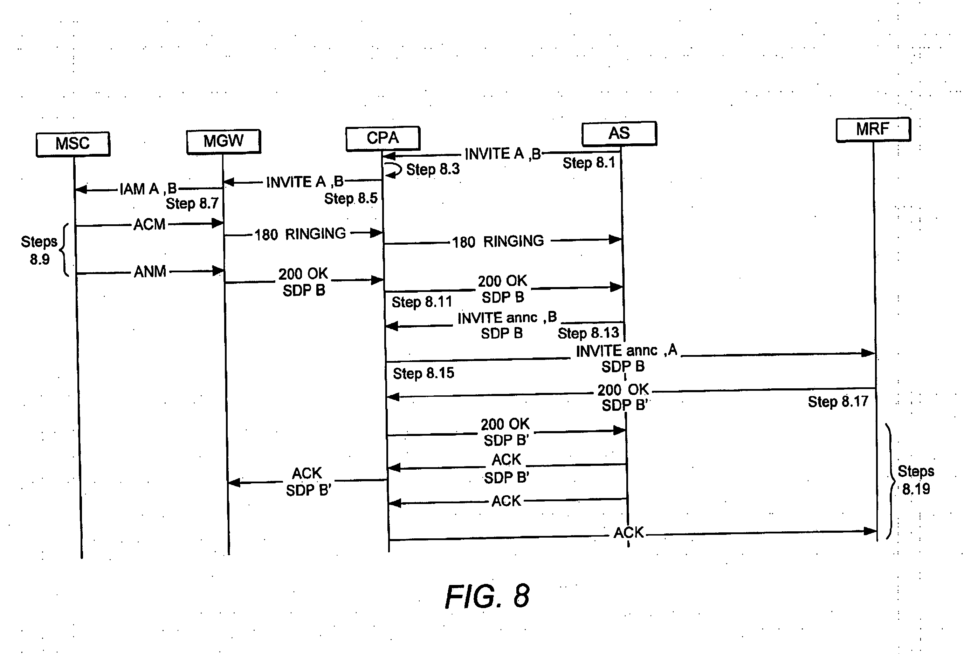

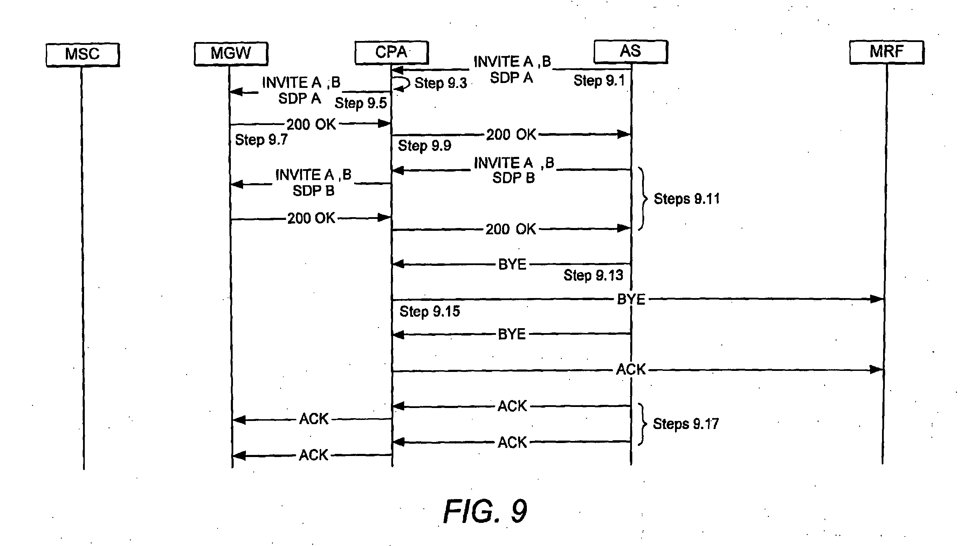

Figures 8 and 9 collectively show another example of the CPA 111 participating in an existing call. Figures 8 and 9 also correspond to Figure 5, in the sense that the initial stage of the call has been set up according to the steps shown in Figure 5. In this example, however, the B number that was called by the calling party corresponds to a service that is triggered in cases where the calling party (A) has screened their Calling Line Identifier (CLI), this having the effect of the called party not being able to identify the identity of the calling party, and thus being unable to make an informed decision as to whether or not to accept the call. Thus the subsequent steps associated with progressing further stages of the call are somewhat different to those shown in Figure 7.

Turning back briefly to Figure 5, in this example the event processing function 401 identifies, at step 5.2 of the initial call set-up, that the B party number corresponds to a subscriber number, and that the A party number has screened his calling number. As a result, and on the basis of the call processing logic 404, the event processing function 401 identifies a SIP AS 101 specifically configured to direct the calling party to an MRF 107 that invites the calling party to leave a message identifying themselves as such, the SIP AS 101 subsequently playing the recorded message to the called party (B) and controlling further call set-up in dependence on further indications from the called party (B), as will now be described.

Thus the recorded message shown as being played at step 5.27 is the message inviting the calling party to leave a message. Turning back to Figure 8, and assuming the calling party chose to leave a message, this causes the SIP AS 101 to send a trigger, specifically a session initiation message INVITE A, B (much as was described in relation to step 7.1 of Figure 7), to the CPA 111. In response, the CPA 111 retrieves the parameters from the INVITE message and queries the configuration data for all existing calls corresponding to the retrieved parameters. In this case there is an entry corresponding to calling party A, and accordingly the event processing function 401 identifies that this is a call that has been anchored in the SIP domain (step 8.3) and forwards the session initiation message INVITE A,B to the MGW 103 currently anchoring the call (step 8.5). Per conventional methods, this causes the MGW 103 to send an SUP invitation message to the MSC in respect of called party B (step 8.7), and assuming party B to answer the call, the event processing function 401 receives a ringing signalling message from the MGW 103 (shown collectively as steps 8.9). It is to be noted that during this further stage of the call set-up the calling party A remains a party to the call, albeit connected to the MRF 105, which, once it has registered the message left by the calling party A, plays a suitable follow up message or music.

In response to receipt of the ringing signalling message 200 OK SDP B, and again in accordance with its call processing logic 404, the event processing function 401 queries the configuration data to identify whether or not there is an entry for the parameters included in the ringing signalling message. In this case there is an entry for a SIP AS 101 in association with party B, so the event processing function 401 proxies the ringing signalling message onto the SIP AS 101 (step 8.11). As will be appreciated from the foregoing, the functionality of any given SIP AS is outside the scope of embodiments of the invention, since embodiments of the invention are only concerned with handling messages received from the SIP AS (among other component). However, for completeness, the functionality of the SIP AS is described herein to provide adequate context for the associated capabilities of the CPA 111.

In response to the ringing signalling message the SIP AS 101 identifies that it is required to connect the called party (B) to the recorded announcement left by the calling party (A) and accordingly sends a session response message INVITE annc, B, SDP B to the CPA 111 (step 8.13). The parameter "annc" identifies the IP address of the MRF 105 holding the recorded message. The event processing function 401 then analyses the session response message INVITE annc, B SDP B received at step 8.13, querying the configuration data to identify whether or not it holds data relating to the parameters included in the response message. Since the configuration data includes the B party identifier in association with the SIP AS 101 and MRF 105 (identified at step 5.13 and with which the calling party (A) left the message at step 5.27), the event processing function 401 identifies the MRF 105 corresponding to the annc identifier, and the message creation component 407 creates and sends a session setup request messages INVITE annc, A SDP B to the identified MRF 105 (step 8.15). This enables the MRF 105 to identify that it has stored a message recorded by party A, and to use the parameter B identified in the session descriptor to send a ringing response message 200 OK SDP B (step 8.17). This results in the CPA 111 connecting the called party B with the MRF 105 so that the called party (B) can hear the recorded message (shown collectively as steps 8.19).

Turning to Figure 9, assuming the called party (B) indicates that he wishes to take the call, a trigger is generated by the SIP AS 101, in the form of a session setup request message INVITE A, B SDP A (step 9.1). As described in relation to steps 7.1 and 8.1, this causes the event processing function 401 to query its dynamic data in the configuration data 405 to retrieve any call processing parameters relevant to the session setup request message (step 9.3). In this case the configuration data includes an entry for parties A and B, specifically identifying that there is a session anchored at the MGW 103, and accordingly forwards the session setup request message to the MGW 103 at step 9.5. In response to a ringing response message from the calling party (A) (step 9.7), the CPA 111 forwards the message to the SIP AS 101 (step 9.9). Steps 9.1-9.9 are then repeated in respect of the called party (B) (shown collectively as steps 9.11), and, since there are no further parties to the call, the SIP AS 101 sends a session disconnect message BYE (step 9.13).

Pursuant to the call processing logic 404, the event processing function 401 determines that the connections to the MRF 105 can now be disconnected, and accordingly sends a session disconnect message BYE to the MRF 105 (step 9.15). Per conventional SIP protocols, the SIP AS 101 also transmits ACK session response messages in respect of the 200 OK ringing response messages (steps 9.9 and 9.11), which are forwarded to the MGW 103 by the CPA 111 so as to connect the called and calling parties (shown collectively as steps 9.17).

It should thus be appreciated from the foregoing that the CPA 111 moves the context of a requested network service between network types so as to enable the service to be successfully provisioned as if the call had originated from the network within which the call handling logic and services are provided - in this case a SIP domain. Because the call is anchored in a domain that can support the network service, the underlying functionality of the call handling logic and services (implemented as SIP AS and MRF, among others) can remain unchanged, and in fact completely unaware as to the origin of the requested network service. This aspect of embodiments of the invention is particularly beneficial in view of the fact that the current trend for emerging services is to implement same as SIP applications, but recognises the reality that many operators do, and will for some time, operate and provide connectivity via legacy networks, whose infrastructure cannot, of itself, support these emerging services.

In the foregoing, the CPA 111 is shown embodied within a bespoke network node; some of the functionality, such as the mapping and translation between IN to SIP, is largely conventional (being documented in, for example, TS 23.292 as described above), but the shifting of call context in an intelligent manner and corresponding call set-up functionality that is required once the call has been anchored in the SIP domain is believed to be entirely new.

The above embodiments are to be understood as illustrative examples of the invention. Further embodiments of the invention are envisaged. For example, embodiments of the invention can be used to manage Virtual PBX (VPBX), virtual call centre, and conference services. Considering Virtual PBX services in particular, certain VPBX systems may be configured to facilitate communications between the legacy and SIP, or IMS, networks, and thus arranged to trigger the legacy network and receive network triggers therefrom. When implemented as a SIP Application Server, the VPBX can be configured to send initial INVITE messages to the CPA 111, because, as described with reference to Figure 3, the VPBX would see the CPA 111 as an S-CSCF. Such an arrangement would be particularly advantageous for Click to Call (C2C) services involving a device that is accessible via the legacy network, and for which IN triggers are required to be transmitted, received and processed by the VPBX. The CPA 111 would route all associated signalling messages via the MGW 103 so as to ensure that associated and subsequent parts of the service are handles appropriately. Thus in this arrangement the service initiation request message originates from within the SIP, or IMS, network rather than from the legacy network. Accordingly it is to be appreciated that a CPA 111 according to embodiments of the invention is not limited to serving service initiation request messages that originate from the legacy network.

Further, whilst in the above embodiments signalling messages in the IP network are formulated as SIP signalling messages, it is to be understood that embodiments of the invention can apply to future IP signalling protocols.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A call processing apparatus for use in processing service initiation request messages in a call processing system, the call processing system, comprising a switching node (MSC) and an Internet Protocol (IP) session-based serving network node (SIP AS), and the service initiation request message corresponding to a service to be provided by the call processing system,
the apparatus comprising a function arranged, on the basis of a service initiation request message sent by the switching node (MSC) in a network currently involved in call setup, to identify the network service as one that requires anchoring with a gateway serving node (MGW) capable of processing signaling data received from the switching node (MSC) and signaling data received from the IP session-based serving network node (SIP AS).

2. A call processing apparatus according to claim 1, wherein, on the basis of a session initiation response message received from the IP session-based serving network node (SIP AS) relating to said service initiation request message, the function is further arranged to generate a redirecting instruction message, said redirecting instruction message comprising an identifier associated with the call, and to transmit said generated redirecting instruction message to the switching node (MSC) from which the service initiation request message is received so as to anchor the call with the gateway serving node (MGW).

3. A call processing apparatus according to claim 1 or claim 2, the apparatus further comprising storage arranged to store a mapping between a service identifier and a call anchoring requirement and wherein, responsive to a determination that the service initiation request message contains a first type of said service identifier, the apparatus is arranged to identify the network service as requiring anchoring by said gateway serving node (NGW).

4. A call processing apparatus according to claim 3, wherein the mapping further includes addressing data indicative of an IP session-based serving network node (SIP AS) corresponding to the service identifier, said addressing data being for use in generating a session-based service initiation request message corresponding to said service initiation message received from the switching node.

5. A call processing apparatus according to claim 4, wherein the function is arranged to monitor for receipt of said session initiation response message, and, responsive to same, to generate said redirecting instruction message.

6. A call processing apparatus according to any one of claim 2 to claim 5, wherein the function is arranged to compare the content of said session initiation response message with a predetermined call processing criterion, whereby to generate said redirecting instruction message.

7. A call processing apparatus according to claim 6, wherein the function is arranged to store said content of the session initiation response message and to identify an IP session-based service node (MRF) from said content of the session response message.

8. A call processing apparatus according to claim 7, wherein responsive to receipt of signaling data from the gateway serving node (MGW) the function is arranged to correlate said signaling data with data within said redirecting instruction message, whereby to identify said IP session-based service node (MRF), the function being further arranged to transmit a media reservation instruction message to said IP session-based service node (MRF) in respect of a first stage of the service.

9. A call processing apparatus according to any one of claim 2 to claim 5, wherein, responsive to the session initiation response message, the function is arranged to monitor for further session initiation response messages of a predetermined type.

10. A call processing apparatus according to claim 9, wherein the function is arranged to monitor for said further session initiation response messages during a predetermined period, the function being arranged to identify and store in said storage data indicative of a party to the network service from said further session initiation response messages, and to send said redirecting instruction message after a determination that all further session initiation response messages corresponding to the network service have been received.

11. A call processing apparatus according to claim 10, wherein, responsive to receipt of signaling data from the gateway serving node (MGW), the function is arranged to correlate said signaling data with data within said redirecting instruction message, and to transmit, on the basis of said data indicative of parties to the network service, session setup request messages in respect of the network service to at least some said parties.

12. A call processing apparatus according to any one of the preceding claims, wherein the function is arranged to proxy signaling messages between said gateway serving node (MGW) and the Internet Protocol (IP) session-based serving network node (SIP AS).

13. A method of processing service initiation request messages in a call processing system, the call processing system comprising a switching node (MSC) and an Internet Protocol (IP) session-based serving network node (SIP AS), and the service initiation request message corresponding to a service to be provided by the call processing system, the method comprising identifying, on the basis of a service initiation request message sent by the switching node (MSC) in a network currently involved in call setup, the network service as one that requires anchoring with a gateway serving node (MGW) capable of processing signaling data received from the switching node (MSC) and signaling data received from the IP session-based serving network node (SIP AS).

14. A call processing system for use in processing service initiation request messages, the call processing system comprising a switching node (MSC), an Internet Protocol (IP) session-based serving network node (SIP AS), a gateway serving node (MGW) capable of processing signaling data received from the switching node (MSC) and signaling data received from the IP session-based serving network node (SIP AS), and a call processing apparatus (CPA),
wherein the service initiation request message corresponds to a service to be provided by the call processing system, and the call processing apparatus comprises a function arranged, on the basis of a service initiation request message sent by the switching node (MSC) in a network currently involved in call setup, to identify the network service as one that requires anchoring with the gateway serving node (MGW).

15. A computer program, or a suite of computer program products comprising program code means being adapted to perform the step of claim 13 when the program is run on a computer or on a suite of computers.
